# EUROPÄISCHE PATENTSCHRIFT

(11) **EP 1 744 075 B1**
(45) Veröffentlichungstag und Bekanntmachung des Hinweises auf die Patenterteilung: **06.01.2010**
(21) Anmeldenummer: 06007186.7
(22) Anmeldetag: 05.04.2006
(51) Int. Cl.: F16D 65/14, F16D 23/12

(54) **Wipphebelaktor, insbesondere zur Betätigung einer Kupplung**
Rocking lever actuator, in particular for actuating a clutch
Dispositif de commande avec un levier balancant, en particulier pour un embrayage

(30) Priorität: 28.04.2005 DE 102005019793
(43) Veröffentlichungstag der Anmeldung: 17.01.2007
(73) Patentinhaber: LuK Lamellen und Kupplungsbau Beteiligungs KG, 77815 Bühl (DE)
(72) Erfinder: Ahnert, Gerd, 77880 Sasbach (DE)

(56) Entgegenhaltungen:
- EP-A1- 1 455 106
- DE-A1- 3 718 955
- DE-A1- 3 718 973
- DE-B3- 10 308 886

## Beschreibung

Die vorliegende Erfindung betrifft einen Wipphebelaktor zur Betätigung einer Kupplung eines Fahrzeuges gemäß dem Oberbegriff des Patentanspruchs 1.

Bisher wurden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben werden konnte. Wenn nun über den Verfahrweg der Kupplungsbetätigung eine veränderliche Betätigungskraft aufgebracht werden musste, so wurde zu diesem Zweck der Elektromotor, um ein entsprechend hohes Moment zur Verfügung zu stellen, mit entsprechenden Stromwerten beaufschlagt.

Um nun diese Problematik zu umgehen, wurde von der Anmelderin ein unter der DE 10 2004 009 832 A1 beschriebenes Hebelsystem zum Betätigen von Kupplungen geschaffen. Das dort beschriebene Hebelsystem weist Hebelarme mit veränderbaren Hebellängen auf, wobei zu diesem Zweck der den Hebel abstützende Hebeldrehpunkt entlang des Betätigungshebels verlagert werden kann und sich somit bei einem unveränderlichen Krafteinleitungspunkt in den Hebel in Abhängigkeit von der Verlagerung des Hebeldrehpunkts verschiedene wirksame Hebellängen ergeben. Obwohl ein solches Hebelsystem bereits vielfache Vorteile gegenüber bekannten Kupplungsbetätigungsvorrichtungen aufweist, lässt es trotzdem Raum für deutliche Verbesserungen.

Das nach der oben genannten Offenlegungsschrift bekannte Hebelsystem wird an dem Krafteinleitungspunkt der Betätigungskraft in den Hebel mit einer vorbestimmbaren Kraft, der Lastfederkraft beaufschlagt. Ausgangsseitig, d. h. also beispielsweise auf der Seite eines Axiallagers wirkt eine entsprechende, zur in den Betätigungshebel eingeleiteten Lastfederkraft komplementäre Reaktionskraft, auch Einrückkraft genannt. Anstelle eines einzelnen Betätigungshebels kann beispielsweise auch eine Vielzahl von um das Axiallager radial sternförmig verlaufenden gleichartigen Betätigungshebeln vorgesehen werden.

Der Hebeldrehpunkt für den Betätigungshebel ist in Form einer Stützrolle oder durch mehrere Rollen gebildet. Diese Stützrolle wird mittels eines elektromotorischen Antriebs verlagert, um die Länge der beiden sich ergebenden Hebelarme am Betätigungshebel zu verändern.

Bei den bekannten Wipphebelaktoren ist der Bauraum für die Aktorenteile zwischen der Kupplung und einer Kupplungsglockenwand begrenzt (geringe Bauhöhe des Aktors).

Der Aktormotor steht zumeist radial aus der Kupplungsglocke heraus und durch die Einschränkungen im umliegenden Bauraum ist die Anordnung des Wipphebels in seiner Winkellage vorgegeben. Zudem gibt es keine - zumindest nicht ohne zusätzliche mechanisch wirkende Bauteile - Möglichkeit der Erstein- bzw. Nachstellung des Betätigungsweges. Die deshalb auftretenden Abweichungen der Kraftwinkel am Wipphebel führen zu einer Erhöhung der maximal auftretenden Aktormotorbelastung.

Ein weiterer Wipphebel der eingangs genannten Art ist aus der EP 1 455 106 A1 bekannt.

Es ist daher die Aufgabe der vorliegenden Erfindung, bei einem Wipphebelaktor, der zur Betätigung einer Kupplung eines Fahrzeuges vorgesehen ist und der über mindestens einen, eine veränderliche Betätigungskraft zum Öffnen und/oder Schließen der Kupplung ausübenden Wipphebel verfügt, die Einschränkungen hinsichtlich der Unterbringung der mechanischen Bauteile, die durch den begrenzten Bauraum auftreten, zu beseitigen.

Diese Aufgabe wird gelöst durch einen Wipphebelaktor mit den Merkmalen des Patentanspruchs 1.

Demnach zeichnet sich der erfindungsgemäße Wipphebelaktor, der zur Betätigung einer Kupplung eines Fahrzeuges, mit mindestens einem, eine veränderliche Betätigungskraft zum Öffnen und/oder Schließen der Kupplung ausübenden Wipphebel versehen ist, der mittels einer Lastfeder beaufschlagbar ist, wobei ein Hebeldrehpunkt des Wipphebels verlagerbar ist, dadurch aus, dass zwischen dem Wipphebel und einem Einrücklager der Kupplung eine hydraulische Übertragungsstrecke zur Kraftübertragung angeordnet ist.

Die Vorteile dieser Lösung sind:
a) es ist eine flexible Anordnung des Wipphebels und einer Stützrollen- bzw. Rolleneinheit möglich;
b) die Ausrichtung der Aktormotoren (im Falle einer Doppelkupplung) ist frei wählbar;
c) die Schwenkrichtung des Wipphebels muss nicht mehr die herkömmliche Orientierung aufweisen (Drehachse parallel zum Kupplungsglockenboden) - der Wipphebel kann somit flach am Boden der Kupplungsglocke liegen; zum Beispiel kann die Drehachse des Wipphebels parallel zur Getriebeeingangswelle angeordnet sein;
d) durch die variable Anordnung des Wipphebels ist eine Vereinfachung der Bauteile möglich; zum Beispiel ist nur eine Lastfeder mit einer einfachen Anbindung erforderlich und die Rolleneinheit kann aus drei einzelnen Rollen aufgebaut sein;
e) die Lage der Lastfeder führt zu einer größeren Flexibilität bei der Auswahl der Federparameter - die Federlänge ist nicht mehr durch den Abstand zwischen der Kupplung und dem Kupplungsglockenboden bestimmt;
f) die Möglichkeit des hydraulischen Schnüffelns (Längenausgleich) bewirkt eine automatische Ersteinstellung des Kupplungssystems;
g) die Möglichkeit des hydraulischen Schnüffelns führt zu einer reversiblen Anpassung des Wippkurvenaktors an temporäre Längenänderungen des Kupplungssystems.

Vorzugsweise kann der erfindungsgemäße Wipphebelaktor bei einer Doppelkupplungseinheit eingesetzt werden.

Bei dem erfindungsgemäßen Wipphebelaktor sind in der hydrostatischen Übertragungsstrecke vorzugsweise Geberzylinder und Nehmerzylinder vorgesehen, die über eine hydraulische Strecke miteinander verbunden sind.

Besonders vorteilhaft kann es sein, den Wipphebelaktor im Getriebegehäuse unterzubringen, da dann die Schmierung der bewegten Teile über das Getriebeöl erfolgen kann und der Antrieb über die Getriebeaktorik erfolgen kann.

Auch kann es sehr vorteilhaft sein den Wipphebelaktor in einem separaten Aktorgehäuse unterzubringen, so dass dieses mit einem Fluid zumindest teilweise derart befüllt ist, dass die bewegten Bauteile geschmiert sind. Bei dieser Variante können die Aktormotoren außerhalb des Aktorgehäuses angeordnet werden, so dass lediglich die Motorwelle(n) am Durchtritt durch das Aktorgehäuse abgedichtet werden müssen.

Die vorstehende Aufgaben, die Merkmale und Vorteile nach der vorliegenden Erfindung sind unter Berücksichtigung der folgenden, detaillierten Beschreibung der bevorzugten Ausführungsformen der vorliegenden Erfindung und unter Bezugnahme auf die zugehörigen Zeichnungen ausführlich dargestellt.

In den Zeichnungen ist in der
Figur 1 eine erste bevorzugte Ausführungsform des vorliegenden Wipphebelaktors schematisch dargestellt, wobei zwei Wipphebelaktoren mit zwei hydraulischen Übertragungsstrecken für eine Doppelkupplungseinheit vorgesehen sind;
Figur 2 eine zweite bevorzugte Ausführungsform des vorliegenden Wipphebelaktors schematisch dargestellt, wobei zwei Wipphebelaktoren mit zwei hydraulischen bzw. hydrostatischen Übertragungsstrecken für eine Doppelkupplungseinheit vorgesehen sind und die Wipphebelaktoren in einem separaten Aktorengehäuse untergebracht sind;
Figur 3 jeweils ein schematisches Diagramm gezeigt, in denen die räumlichen Anordnungen einer Lastfeder, einer Rolleneinheit (Stützrolle) und eines hydraulischen Geberzylinders dargestellt sind;
Figur 4 eine dritte Ausführungsform des vorliegenden Wipphebelaktors in einer schematischen Darstellung gezeigt;
Figur 5 eine vierte bevorzugte Ausführungsform des vorliegenden Wipphebelaktors in einer schematischen Darstellung gezeigt, wobei ein Teil der Wipphebelaktors in einem Getriebegehäuse untergebracht ist;
Figur 6 eine fünfte bevorzugte Ausführungsform des vorliegenden Wipphebelaktors in einer schematischen Darstellung gezeigt, wobei ein Teil der Wipphebelaktors in einem Getriebegehäuse und ein Teil in einem Kupplungsglockenboden untergebracht ist; und
Figur 7 eine sechste bevorzugte Ausführungsform des vorliegenden Wipphebelaktors in einer schematischen Darstellung gezeigt, wobei ein Teil der Wipphebelaktors im Getriebegehäuse untergebracht ist und durch die Getriebeaktorik angetrieben ist.

Gleiche Bezugszeichen in den verschiedenen Figuren bezeichnen gleiche bzw. gleichwirkende Bauteile und betreffen damit alle beschriebenen Ausführungsformen gleichermaßen.

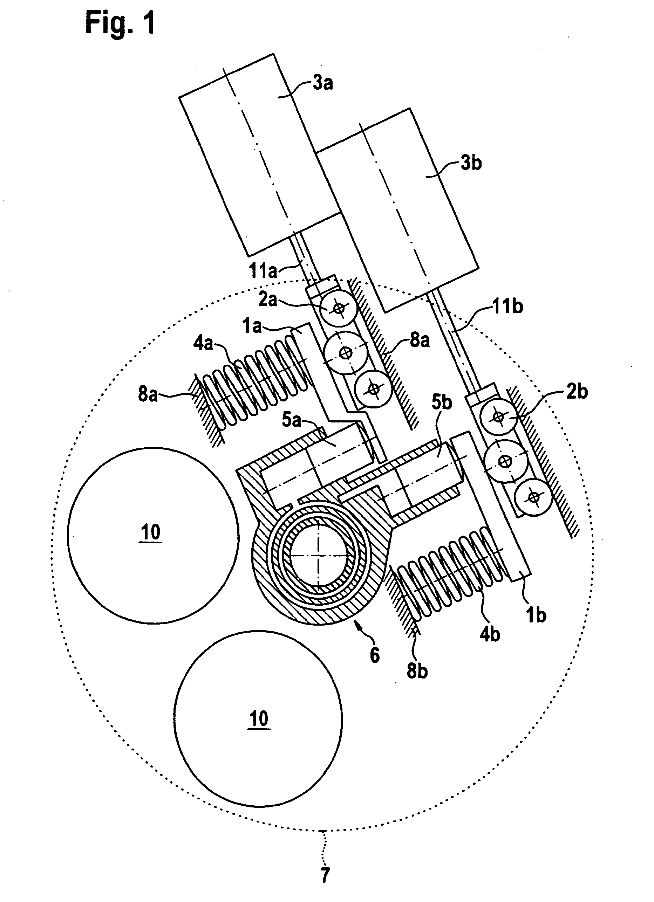

Der erfindungsgemäße Wipphebelaktor, der in der ersten bevorzugten Ausführungsform in der Figur 1 dargestellt ist, wird im Folgenden beschrieben. In der Figur 1 ist eine Doppelkupplungseinheit dargestellt, so dass der vorliegende Wipphebelaktor zweifach vorhanden ist, um jeweils eine der Kupplungen mit einem Wipphebelaktor zu betätigen.

Eine Kontur der Kupplungsglocke 7 der Doppelkupplungseinheit ist schematisch angedeutet. Innerhalb dieser Kontur befinden sich die Kupplungen und der größte Teil der Wipphebelaktorik. Der Antrieb der Wipphebelaktoren erfolgt mittels jeweils eines Aktormotors 3a bzw. 3b, der seine Antriebskraft mittels beispielsweise einer Antriebsspindel 11a bzw. 11 b an eine Rolleneinheit abgibt, die über zumindest eine Stützrolle 2a bzw. 2b verfügt. In der gezeigten Ausführungsform ist die Rolleneinheit aus drei einfachen Rollen aufgebaut, wobei sich die beiden außen liegenden Rollen an einem Gestell 8a bzw. 8b abstützen, während die mittlere Rolle, die Stützrolle 2a, 2b mit einem Wipphebel 1 a bzw. 1 b in Berührung steht. Die Stützrolle 1 a, 1 b kann entlang einer Wipphebelkurvenkontur verfahren bzw. verlagert werden.

Der Wipphebel 1a wird durch eine Lastfeder 4a mit einer Federkraft beaufschlagt, die in der gezeigten Ausführungsform dazu führt, dass der Wipphebel 1a im Uhrzeigersinn belastet und gegebenenfalls verschwenkt wird. Wird die mittige Stützrolle 2a in Richtung weg vom Aktormotor 3a verlagert, so wird der Wipphebel 1a im Uhrzeigersinn geschwenkt und ein Geberzylinder 5a einer hydraulischen bzw. hydrostatischen Übertragungsstrecke betätigt.

Der Wipphebel 1 b wird durch eine Lastfeder 4b mit einer Federkraft beaufschlagt, die in der gezeigten Ausführungsform dazu führt, dass der Wipphebel 1 b im Gegenuhrzeigersinn belastet und gegebenenfalls verschwenkt wird. Wird die mittige Stützrolle 2b in Richtung hin zum Aktormotor 3b verlagert, so wird der Wipphebel 1 b im Gegenuhrzeigersinn geschwenkt und ein Geberzylinder 5b einer weiteren hydraulischen bzw. hydrostatischen Übertragungsstrecke betätigt.

Die hydrostatische Übertragungsstrecke, die zwischen dem Wipphebel 1a bzw. 1b und einem Einrücklager (in der Figur 1 nicht gezeigt) ausgebildet ist, umfaßt im wesentlichen die Geberzylinder 5a bzw. 5b sowie eine zentrale hydraulische Einheit 6, die das in den Geberzylindern 5a, 5b verdrängte Arbeitsfluid weiterleitet und über Nehmerzylinder (nicht dargestellt) an das Einrücklager der zu betätigenden Kupplung die Betätigungskraft weiterleitet. Die Nehmerzylinder sind dabei als CSC (Concentric Slave Cylinder) oder einer anderen Nehmerzylinderform versehen.

Mit dem Bezugszeichen 10 sind weitere Nebenwellenlagerungen in der Figur 1 angedeutet. Durch die Ausbildung der Kraftübertragungsstrecke mittels einer hydraulischen Übertragungsstrecke kann der Wipphebel 1a und/oder 1 b flexibel angeordnet werden. Die Ausrichtung der Aktormotoren 3a bzw. 3b ist entsprechend flexibel und nicht mehr wie im Stand der Technik durch den zur Verfügung stehenden und begrenzten Bauraum und die Bauteileanordnung der Mechanik vorgegeben.

Die hydraulische Übertragungsstrecke kann für beide Kupplungen in einer Baueinheit realisiert werden. Auch ist ein getrennter Aufbau der hydraulischen Übertragungsstrecken denkbar, jedoch in den Figuren nicht dargestellt. Zu berücksichtigen sind die hydraulischen Bedingungen der Übertragungsstrecke und für die Entlüftung ist unter Umständen die Lage einer Schnüffeleinrichtung (z.B. eine Bohrung) und die Lage eines Nachlaufbehälters oberhalb des Nehmerzylinders zu beachten. Als Nehmerzylindersystem können CSC, Mehrkolbeneinrücker oder Kombinationen davon vorgesehen werden.

Teile des vorliegenden Wipphebelaktors können in den Boden der Kupplungsglocke integriert werden. Mittels einer Abdeckplatte wäre gegebenenfalls eine vollständige Abdichtung der Wipphebelaktoren gegenüber dem Kupplungsglockenraum möglich.

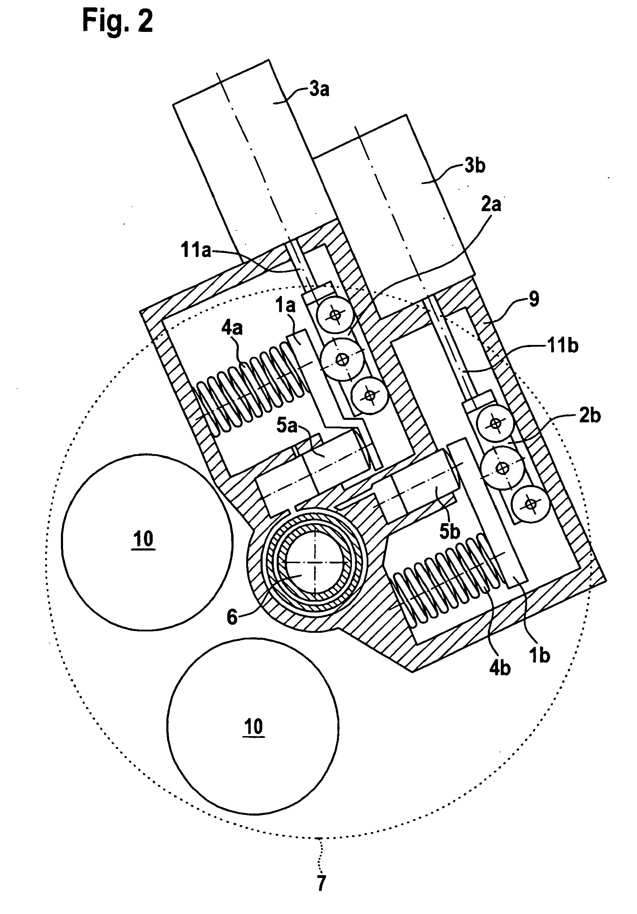

Eine zweite bevorzugte Ausführungsform ist in der Figur 2 dargestellt. Dort ist ähnlich dem Wipphebelaktor nach der Figur 1 ein System mit einer Doppelkupplung beschrieben. Allerdings ist bei dieser Ausführungsform eine eigene Baueinheit aus einem Aktorgehäuse 9 und der hydraulischen Einheit 6 und den Wipphebelaktoren 1 a, 1 b vorgesehen. Diese Baueinheit kann auch einen Nachlaufbehälter (nicht dargestellt) beinhalten. Bei dieser Ausführungsform müssen lediglich die beiden Motorwellen bzw. Antriebsspindeln 11a, 11b beim Durchtritt durch das Aktorgehäuse 9 abgedichtet werden. Die Rolleneinheiten und die Wipphebel 1 a, 1 b befinden sich dann im Inneren des Aktorgehäuses 9 kann zumindest teilweise mit einem Fluid gefüllt sein, welches Schmieraufgaben erfüllen kann und sich damit positiv auf die Reibverhältnisse und den Bauteileverschleiß auswirken kann.

Das gezeigte Aktorgehäuse 9 ist abgeschlossen und abgedichtet. Ähnlich der Ausführungsform nach der Figur 1 ist eine Kontur der Kupplungsglocke 7 der Doppelkupplungseinheit schematisch in die Figur 2 eingezeichnet. Innerhalb der Kontur der Kupplungsglocke 7 befinden sich die Kupplungen. Der Antrieb der Wipphebelaktoren erfolgt mittels jeweils eines Aktormotors 3a bzw. 3b, der jeweils außerhalb des Aktorgehäuses 9 angeordnet ist und der seine Antriebskraft mittels einer Antriebsspindel 11 a bzw. 11 b an eine Rolleneinheit abgibt, die über zumindest eine Stützrolle 2a bzw. 2b verfügt, die entlang der Wipphebelkurvenkontur verlagerbar ist. In der gezeigten zweiten Ausführungsform ist die Rolleneinheit aus drei Rollen aufgebaut, wobei sich die beiden außen liegenden Rollen am Aktorgehäuse 9 abstützen, während die mittlere Rolle, die Stützrolle 2a, 2b mit dem Wipphebel 1 a bzw. 1 b in Berührung steht. Die Stützrolle 1 a, 1 b kann entlang der Wipphebelkurvenkontur verfahren bzw. verlagert werden.

Der Wipphebel 1a wird durch eine Lastfeder 4a mit einer Federkraft beaufschlagt, die in der gezeigten zweiten Ausführungsform bewirkt, dass der Wipphebel 1 a im Uhrzeigersinn belastet und gegebenenfalls verschwenkt wird. Wird die mittige Stützrolle 2a in Richtung weg vom Aktormotor 3a verlagert, so wird der Wipphebel 1 a ebenfalls im Uhrzeigersinn verschwenkt und ein Geberzylinder 5a einer hydraulischen bzw. hydrostatischen Übertragungsstrecke betätigt.

Der Wipphebel 1 b wird durch eine Lastfeder 4b mit einer Federkraft beaufschlagt, die in der gezeigten zweiten Ausführungsform dazu führt, dass der Wipphebel 1 b im Gegenuhrzeigersinn belastet und gegebenenfalls verschwenkt wird. Wird die mittige Stützrolle 2b in Richtung hin zum Aktormotor 3b verlagert, so wird der Wipphebel 1 b ebenfalls im Gegenuhrzeigersinn verschwenkt und ein Geberzylinder 5b einer weiteren hydraulischen bzw. hydrostatischen Übertragungsstrecke betätigt.

Die hydrostatische Übertragungsstrecke, die zwischen dem Wipphebel 1a bzw. 1b und einem Einrücklager (in der Figur 2 nicht gezeigt) ausgebildet ist, umfaßt im wesentlichen die Geberzylinder 5a und 5b sowie eine zentrale hydraulische Einheit 6, die das in den Geberzylindern 5a, 5b verdrängte Arbeitsfluid weiterleitet und über Nehmerzylinder (nicht dargestellt) an das Einrücklager der zu betätigenden Kupplung(en) die Betätigungskraft weiterleitet. Die Nehmerzylinder sind dabei ebenfalls als CSC (Concentric Slave Cylinder) oder einer anderen Nehmerzylinderform vorgesehen.

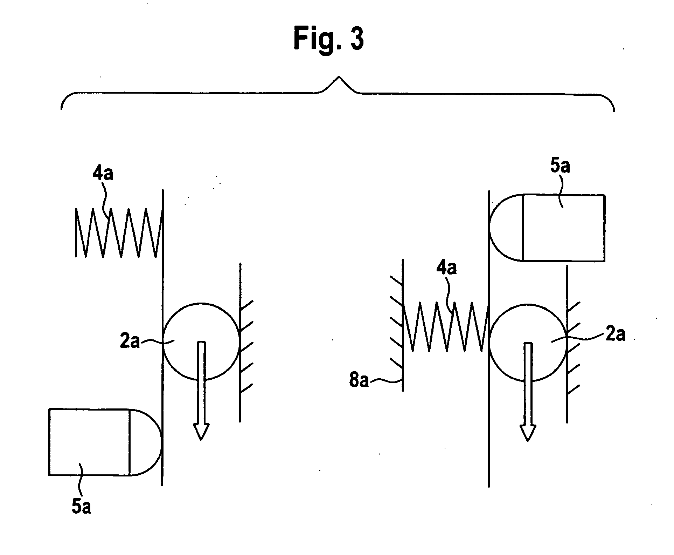

Der vorliegende Wipphebelaktor kann verschiedene räumliche Anordnungen von Lastfeder, Rolleneinheit und Geberzylinder zur Kraftweiterleitung aufweisen. In der Figur 3 sind in Diagrammen mögliche Anordnungen schematisch dargestellt, wobei in der linken Hälfte der Figur 3 eine Stützrolle 2a gezeigt ist, die oben und rechts durch eine Lastfeder 4a beaufschlagt wird, so dass bei einem Verfahren der Stützrolle 2a in Richtung des eingezeichneten Pfeils - also nach unten in der Figur 3 - der Geberzylinder 5a durch den Wipphebel betätigt wird. In der rechten Hälfte der Figur 3 ist die Lastfeder 4a mittig und links am Wipphebel angreifend eingezeichnet, wobei sich die Lastfeder 4a gegen ein Gestell 8a abstützt. Hier verlagert sich die Stützrolle 2a nach unten, in Pfeilrichtung und mittels des Wipphebels wird der Geberzylinder 5a betätigt.

Eine Änderung der räumlichen Lagebeziehung zwischen Feder, Wipphebel und Stützrolle läßt demnach andere (Last-) Federformen zu, die gleiche oder unterschiedliche Kraft- und Steifigkeitsparameter haben können. Solche unterschiedliche Federformen umfassen Blattfedern, Tellerfedern, etc.

Schließlich ist noch die Möglichkeit einer (Kraft-) Übersetzung in der hydraulischen Übertragungsstrecke zu erwähnen sowie der Längenausgleich durch Schnüffeln, so dass eine Variante erreichbar ist, bei der die Kupplung ohne Verschleißnachstellung ausgeführt werden kann. Die Kupplungsübersetzung muss dann so gestaltet werden, dass der Arbeitsbereich der Einrücklager für den Betätigungshub und den Verschleißweg ausreichend groß ist. Die großen Einrückkräfte können durch die hydraulische Übersetzung auf ein für die Gestaltung bzw. Belastung des Wipphebelaktors vorteilhaftes Maß reduziert werden.

Die oben beschriebenen Ausführungsformen betreffen eine Doppelkupplungseinheit bzw. ein Doppelkupplungsgetriebe. Selbstverständlich ist die vorliegende Anordnung einer hydraulischen bzw. hydrostatischen (Kraft-) Übertragungsstrecke auch bei einem Aktor zur Betätigung einer Kupplung sinnvoll und ausführbar.

Durch die vorliegende Kombination eines Wipphebelaktors mit einer hydraulischen Übertragungsstrecke ergeben sich zahlreiche Bauraum- und Funktionsvorteile. Die räumliche Anordnung der Wipphebelaktoren ist wesentlich flexibler. Das hydraulische Schnüffeln kann durch Ersteinstellung und Nachstellung die Aktorbelastung erheblich reduzieren. Die schwingungsdämpfende Wirkung der hydrostatischen Übertragungsstrecke kann vorteilhaft für das Gesamtsystem genutzt werden.

Durch die Integration der Geberzylinder und der Nehmerzylinder in eine Baueinheit kann eine besonders kostengünstige Variante vorgeschlagen werden.

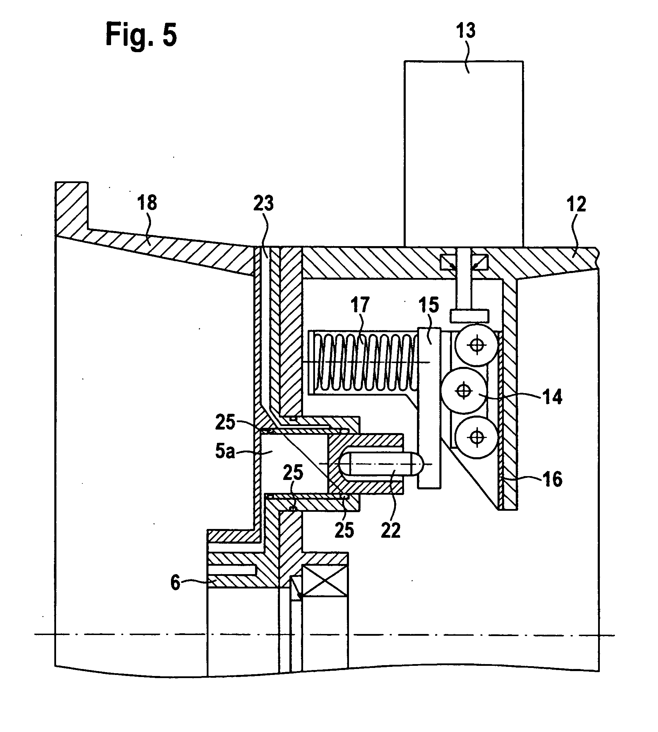

In der Figur 5 ist eine vierte Ausführungsform in Form einer Teilquerschnittansicht des vorliegenden Wipphebelaktors gezeigt. Die Kraftübertragung vom Wipphebelaktor zum Einrücklager (nicht gezeigt) erfolgt über eine zwischengeschaltete hydrostatische Übertragungsstrecke. Der Wipphebelaktor befindet sich außerhalb der Kupplungsglocke 18 und innerhalb des Getriebegehäuses 12. Die folgenden Vorteile ergeben sich: infolge der Anordnung des Wipphebelaktors im Getriebegehäuse 12 ist eine hohe Flexibilität hinsichtlich der räumlichen Anordnung des Wipphebels 15, der Rolleneinheit 14, der Lastfeder 17 etc. geschaffen. Die hydraulische Einheit, bestehend aus einem Koppelglied 22 bzw. dem Geberzylinder 5a und der hydraulischen Einheit mit Nachlaufleitung 23 und Nehmerzylinder (nicht dargestellt) lässt sich einfach montieren. Die hydraulische Einheit läßt sich infolge dieses Aufbaus separat überprüfen. Die hydrostatische Übertragung bietet durch das Schnüffeln (Längenausgleich) Funktionsvorteile. Die Abdichtung des Getriebegehäuses 12 zur Kupplungsglocke 18 ist einfacher und besser auszuführen. Die bewegten Dichtstellen sind mit herkömmlichen Mitteln zu bewerkstelligen.

An dem Getriebegehäuse 12 ist außen liegend der Aktormotor 13 angeordnet. Eine Antriebswelle ist in das Getriebegehäuse 12 hinein geführt und abgedichtet, treibt die Rolleneinheit 14 an, wobei eine der Rollen der Rolleneinheit 14 als Stützrolle ausgebildet ist und mit der Wipphebelkurvenkontur des Wipphebels 15 in Berührung steht. Die Rolleneinheit 14 stützt sich an der Gestellabstützung 16 ab. Eine Lastfeder 17 belastet den Wipphebel 15 derart, dass eine Verschwenkung in Richtung des Uhrzeigersinns in der Figur 5 auftritt. Der Geberzylinder 5a wird dann betätigt und das hydraulische Arbeitsfluid wird im Geberzylinder 5a verdrängt und über eine Leitung in der hydraulischen Einheit an die Nehmerzylinder (nicht dargestellt) weitergeleitet. Die Nehmerzylinder, die innerhalb der Kupplungsglocke 18 liegen, wirken auf das Einrücklager der Kupplung ein und öffnen bzw. schließen diese.

Die Rolleneinheit 14 liegt mit einer mittigen Stützrolle, von insgesamt 3 Rollen bei dieser Ausführungsform, an der Wipphebelkurvenkontur an. Durch Verfahren der Rolleneinheit 14 entlang der Wipphebelkurvenkontur mittels des Aktormotors 13, der vorzugsweise ein Elektromotor ist, wird der Wipphebel 15 verschwenkt.

Die Nehmerzylinder können als CSC oder in einer anderen Nehmerzylinderform ausgeführt sein.

Die Rolleneinheit 14 und andere bewegte Bauteile befindet sich bei dieser Ausführungsform im Ölraum des Getriebegehäuses 12 und sind daher geschmiert, so dass eine geringe Bauteileabnutzung zu erwarten ist. Die Abdichtung des im Ölraum angeordneten Wipphebelaktors nach außerhalb des Getriebegehäuses 12 mittels Dichtungen 25 kann mit herkömmlichen Mitteln ausgeführt werden.

Die hydraulische Einheit 6 ist bei der in der Figur 5 gezeigten Ausführungsform durch eine dunklere Schraffierung - verglichen mit der Kupplungsglocke 18 oder dem Getriebegehäuse 12 - kenntlich gemacht und kann als separate Baueinheit vorgefertigt, geprüft und damit einfach und schnell montiert werden.

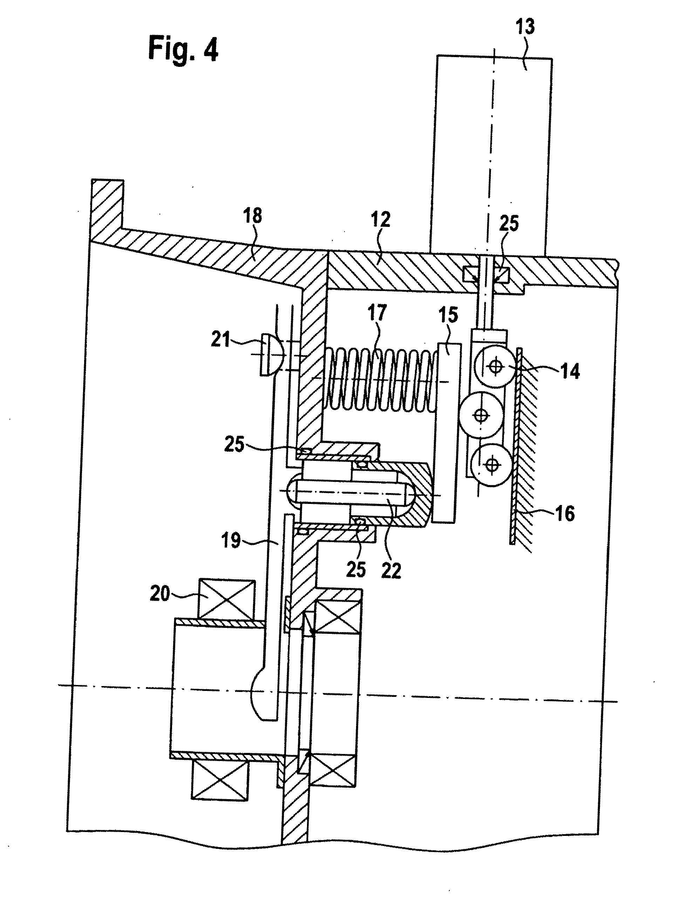

In der Figur 4 ist eine weitere Ausführungsform dargestellt, die sich als Untervariante zum vorstehend geschildertem Aufbau darstellt, wobei jedoch ein mechanisch wirkendes Koppelglied 22 eingesetzt wird. Bei herkömmlichen Wipphebelaktoren sind die mechanischen Bauteile im Zwischenraum zwischen der Kupplung und dem Kupplungsglockenboden angeordnet. Es ergeben sich die eingangs der Beschreibung geschilderten Nachteile. Ist nun der vorliegende Wipphebelaktor im Getriebegehäuse 12 angeordnet, so muss eine Kraftübertragung vom Inneren des Getriebegehäuses 12 durch die Kupplungsglocke und zur Kupplung erfolgen. Bisher wurde bei den oben erläuterten Ausführungsformen eine hydraulische Übertragungsstrecke hierfür eingesetzt.

Ausgehend von der Ausführungsform nach der Figur 5 kann jedoch auch eine mechanische Übertragungsstrecke benutzt werden, die dann aus dem Koppelglied 22 besteht, welches die Kupplungsglocke 18 durchgreift und einen Betätigungshebel 19 betätigt, der wiederum das Einrücklager 20 beaufschlagt, um die Kupplung zu betätigen.

Die wesentlichen Vorteile, die sich aus dieser Ausführungsform ergeben, sind die geringe Höhe des Betätigungshebels 19 in der Kupplungsglocke 18, also zwischen Kupplung und Glockenboden. Der eigentliche Aktor, der Wipphebelaktor befindet sich in einem abgeschlossenen Raum, innerhalb des Getriebegehäuses 12 und ist durch das Getriebeöl geschmiert. Eine längere Lebensdauer infolge geringerer Reibung und geringerem Verschleiß ist zu erwarten. Die räumliche Anordnung des Wipphebels 15 und der Rolleneinheit 14 ist flexibler. Die Ausrichtung des Aktormotors 13 ist praktisch frei wählbar. Durch die gewählte Anordnung des Wipphebels 15 ist eine Vereinfachung der Bauteile möglich, so dass zum Beispiel eine Lastfeder 17 mit einfacher Anbindung möglich ist, sowie die Rolleneinheit 14 aus drei einfachen Rollen oder auch aus einer Kombination einer Linearlagerung mit Kugelumlauf und zwei Rollen bestehen kann. Die Lage der Lastfeder 17 führt zu einer größeren Flexibilität bei der Auswahl der Federparameter, wie der Federlänge, da diese nicht mehr durch den Abstand von der Kupplung zum Glockenboden bestimmt ist.

Insbesondere bei einem Doppelkupplungsgetriebe ist diese Anordnung mit verschiedenen Hebelvarianten von Vorteil. Durch die Wahl der Lage des gestellfesten Drehpunktes 21 am Betätigungshebel 19 kann die mögliche Position des erfindungsgemäßen Wipphebelaktors entsprechend variiert werden.

Auch bei der Ausführungsform nach der Figur 4 treibt der Aktormotor 13 mittels einer Antriebswelle, die das Getriebegehäuse 12 durchgreift, die Rolleneinheit 14 an, die an der Gestellabstützung 16 abgestützt ist. Die Rolleneinheit 14 belastet den Wipphebel 15 derart, dass dieser auf das Koppelglied 22 eine Kraft ausüben kann. Das Koppelglied 22 durchgreift die Kupplungsglocke 18 - bzw. den Boden - und drückt auf den Betätigungshebel 19, der an einem Drehpunkt 21 am Kupplungsglockenboden verschwenkbar festgelegt ist. Durch die Betätigung des Betätigungshebels 19 wird eine Kraft auf das Einrücklager 20 der Kupplung ausgeübt, um diese zu betätigen.

Die Abdichtung der Antriebswelle des Aktormotors 13 relativ zum Getriebegehäuse 12 erfolgt mittels einer Dichtung 25, sowie auch das Koppelglied 22 mittels Dichtungen 25 im Boden der Kupplungsglocke 18 abgedichtet ist.

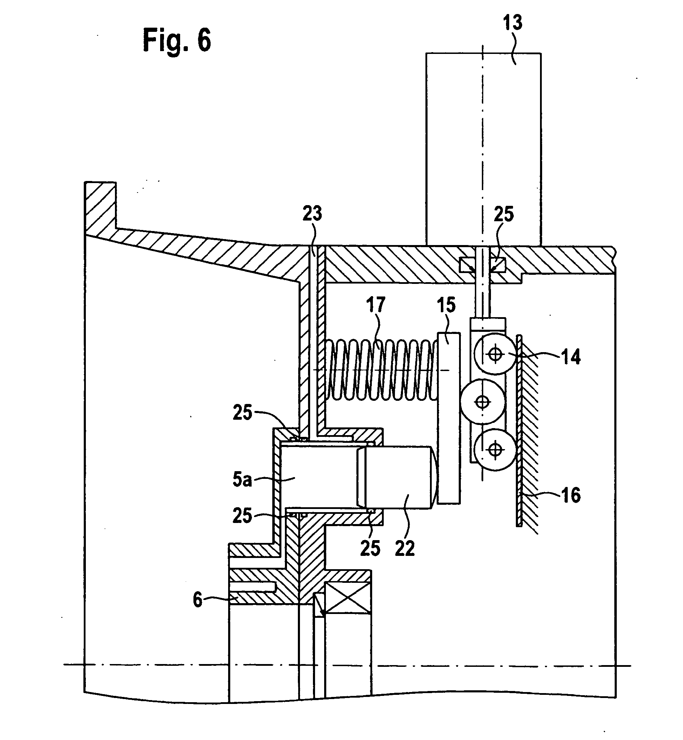

In der Figur 6 ist eine fünfte bevorzugte Ausführungsform des vorliegenden Wipphebelaktors dargestellt. Hier ist die hydraulische Übertragungsstrecke zumindest teilweise in den Boden der Kupplungsglocke 18 integriert. Vom prinzipiellen Aufbau ähnelt diese Ausführungsform der Variante nach der Figur 5, wobei die Nachlaufleitung 23 und die Geberzylinder 5a (-gehäuse) in den Boden der Kupplungsglocke 18 integriert sind. Das Kopplungsglied 22 zur Übertragung der Kraft vom Wipphebel 15 auf die Kupplung ist hierbei der Geberzylinder 5a. Vom Wipphebelaktor wird hydrostatisch die Kraft auf das Einrücksystem der Kupplung übertragen.

Ebenso ist es denkbar, eine weitere Integration der Getriebewellendichtungen oder sogar der Lagerstellen in das Gehäuse der hydraulischen Einheit 6 vorzunehmen.

Bei der Ausführungsform nach der Figur 5 ist an dem Getriebegehäuse außen liegend der Aktormotor 13 angeordnet. Eine Antriebswelle ist in das Getriebegehäuse hinein geführt und mit einer Dichtung 25 abgedichtet, treibt die Rolleneinheit 14 an, wobei eine der Rollen (die mittlere) der Rolleneinheit 14 als Stützrolle ausgebildet ist und mit der Wipphebelkurvenkontur des Wipphebels 15 in Berührung steht. Die Rolleneinheit 14 stützt sich an der Gestellabstützung 16 ab. Eine Lastfeder 17 belastet den Wipphebel 15 derart, dass eine Verschwenkung in Richtung des Uhrzeigersinns in der Figur 5 auftritt. Der Geberzylinder 5a wird dann betätigt und das hydraulische Arbeitsfluid wird im Geberzylinder 5a verdrängt und über eine Leitung in der hydraulischen Einheit an die Nehmerzylinder (nicht dargestellt) in der hydraulischen Einheit 6 weitergeleitet. Die Nehmerzylinder, die innerhalb der Kupplungsglocke 18 liegen, wirken auf das Einrücklager der Kupplung ein und betätigen diese.

Die Rolleneinheit 14 liegt mit der mittig angeordneten Stützrolle von insgesamt 3 Rollen bei dieser Ausführungsform an der Wipphebelkurvenkontur an. Durch Verfahren der Rolleneinheit 14 entlang der Wipphebelkurvenkontur mittels des Aktormotors 13, der vorzugsweise ein Elektromotor ist, wird der Wipphebel 15 verschwenkt und der Geberzylinder betätigt.

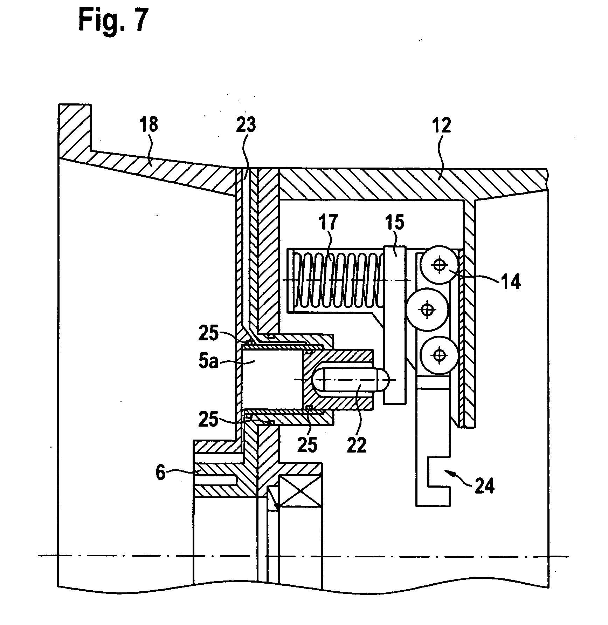

Schließlich ist in der Figur 7 eine sechste bevorzugte Ausführungsform dargestellt. Der Wipphebelaktor ist wiederum im Inneren des Getriebegehäuses 12 angeordnet. Der besondere Vorteil, der bei dieser Ausführungsform zum Tragen kommt, ist die Ausbildung des Antriebs des Wipphebelaktors. Bei der sechsten Ausführungsform wird der Wipphebelaktor nicht durch einen Aktormotor 13, wie bei den bisherigen Ausführungsformen angetrieben, sondern es ist ein Eingriff 24 eines Getriebeaktors vorgesehen, so dass die Rolleneinheit 14 direkt durch den Getriebeaktor angetrieben werden kann.

Bei der Ausführungsform nach der Figur 7 ist kein eigener Aktormotor für den Wipphebelaktor vorgesehen. Eine bereits im Getriebe vorhandene Getriebeaktorik greift am Eingriff 24 der Rolleneinheit 14 an, treibt die Rolleneinheit 14 an, wobei eine der Rollen (wiederum die mittlere) der Rolleneinheit 14 als Stützrolle ausgebildet ist und mit der Wipphebelkurvenkontur des Wipphebels 15 in Berührung steht. Die Rolleneinheit 14 stützt sich an der Gestellabstützung (rechts in der Figur 7) ab. Eine Lastfeder 17 belastet den Wipphebel 15 derart, dass eine Verschwenkung in Richtung des Uhrzeigersinns in der Figur 5 auftritt. Der Geberzylinder 5a bzw. das hydraulische Koppelglied 22 wird dann betätigt und das hydraulische Arbeitsfluid wird im Geberzylinder 5a verdrängt und über eine Leitung in der hydraulischen Einheit 6 an die Nehmerzylinder (nicht dargestellt) in der hydraulischen Einheit 6 weitergeleitet. Die Nehmerzylinder, die innerhalb der Kupplungsglocke 18 liegen, wirken auf das Einrücklager (nicht dargestellt) der Kupplung ein und betätigen diese.

Die Rolleneinheit 14 liegt mit der mittig angeordneten Stützrolle von insgesamt 3 Rollen bei dieser Ausführungsform an der Wipphebelkurvenkontur an. Durch Verfahren der Rolleneinheit 14 entlang der Wipphebelkurvenkontur mittels der Getriebeaktorik wird der Wipphebel 15 verschwenkt und der Geberzylinder 5a betätigt.

Durch Kombination eines Wipphebelaktors mit einer zusätzlichen Übertragungsstrecke ergeben sich neue Bauraum- und Funktionsvorteile. Die vorliegende Anordnung der Wipphebelaktoren ist wesentlich flexibler als wie nach dem Stand der Technik. Eine vorliegende Übertragungsstrecke ist hydraulisch bzw. hydrostatisch ausgeführt, wie in den obigen Ausführungsformen erläutert; jedoch ist auch eine Variante mit einer mechanischen Übertragungsstrecke vorteilhaft einsetzbar.

Kurz zusammen gefasst, wird vorliegend ein Wipphebelaktor geschaffen, der insbesondere zur Betätigung einer Kupplung bzw. einer Doppelkupplung eines Fahrzeuges, mit mindestens einem, eine veränderliche Betätigungskraft zum Öffnen und/oder Schließen der Kupplung ausübenden Wipphebel versehen ist, der mittels einer Lastfeder beaufschlagbar ist, wobei ein Hebeldrehpunkt des Wipphebels vorzugsweise mittels eines Elektromotors verlagerbar ist, und wobei zwischen dem Wipphebel und einem Einrücklager der Kupplung eine hydraulische bzw. hydrostatische Übertragungsstrecke zur Kraftübertragung angeordnet ist.

## Patentansprüche

1. Wipphebelaktor, zur Betätigung einer Kupplung eines Fahrzeuges, mit mindestens einem, eine veränderliche Betätigungskraft zum Öffnen und/oder Schließen der Kupplung ausübenden Wipphebel (1 a, 1 b, 15), der mittels einer Lastfeder (4a, 4b, 17) beaufschlagbar ist, wobei ein Hebeldrehpunkt des Wipphebels (1a, 1 b, 15) verlagerbar ist, **dadurch gekennzeichnet, dass** zwischen dem Wipphebel (1a, 1b, 15) und einem Einrücklager (20) der Kupplung eine hydraulische Übertragungsstrecke zur Kraftübertragung angeordnet ist.

2. Wipphebelaktor nach Anspruch 1, **dadurch gekennzeichnet, dass** die Kupplung eine Doppelkupplungseinheit ist.

3. Wipphebelaktor nach Anspruch 1 oder 2, **dadurch gekennzeichnet, dass** die hydraulische Übertragungstrecke Geberzylinder (5a, 5b) und Nehmerzylinder aufweist.

4. Wipphebelaktor nach einem der Ansprüche 1 bis 3, **dadurch gekennzeichnet, dass** der Wipphebelaktor in einem abgeschlossenen Aktorgehäuse (9) angeordnet ist.

5. Wipphebelaktor nach Anspruch 4, **dadurch gekennzeichnet, dass** das Aktorgehäuse (9) getrennt vom Getriebegehäuse ausgebildet ist.

6. Wipphebelaktor nach einem der Ansprüche 1 bis 5, **dadurch gekennzeichnet, dass** zwischen dem Einrücklager (20) und der hydraulischen Übertragungsstrecke ein Betätigungshebel (19) zur Kraftübertragung vorgesehen ist.

7. Wipphebelaktor nach einem der Ansprüche 1 bis 3, **dadurch gekennzeichnet, dass** der Wipphebelaktor zumindest teilweise im Getriebegehäuse (12) angeordnet ist.

8. Wipphebelaktor nach Anspruch 7, **dadurch gekennzeichnet, dass** der Wipphebelaktor im Getriebegehäuse (12) angeordnet ist.

9. Wipphebelaktor nach einem der Ansprüche 1 bis 8, **dadurch gekennzeichnet, dass** der Hebeldrehpunkt des Wipphebels (1a,1b, 15) mittels einer Stützrolle (2a, 2b) ausgebildet ist, die entlang einer Wipphebelkurve verlagert wird.

10. Wipphebelaktor nach Anspruch 9, **dadurch gekennzeichnet, dass** die Stützrolle (2a, 2b) mittels eines Aktormotors (3a, 3b) zumindest in einer Bewegungsrichtung angetrieben wird.

11. Wipphebelaktor nach Anspruch 9, **dadurch gekennzeichnet, dass** die Stützrolle (2a, 2b) mittels eines Getriebeaktors angetrieben wird.

12. Wipphebelaktor nach Anspruch 10, **dadurch gekennzeichnet, dass** der Aktormotor (3a, 3b) ein Elektromotor ist.

## Claims

1. Rocking lever actuator for actuating a clutch of a vehicle, having at least one rocking lever (1a, 1b, 15) which imparts a variable actuating force for opening and/or closing the clutch and which can be acted on by means of a load spring (4a, 4b, 17), with a lever fulcrum of the rocking lever (1a, 1b, 15) being movable, **characterized in that** a hydraulic transmission path for force transmission is arranged between the rocking lever (1a, 1b, 15) and an engagement bearing (20) of the clutch.

2. Rocking lever actuator according to Claim 1, **characterized in that** the clutch is a dual-clutch unit.

3. Rocking lever actuator according to Claim 1 or 2, **characterized in that** the hydraulic transmission path has master cylinders (5a, 5b) and slave cylinders.

4. Rocking lever actuator according to one of Claims 1 to 3, **characterized in that** the rocking lever actuator is arranged in a closed actuator housing (9).

5. Rocking lever actuator according to Claim 4, **characterized in that** the actuator housing (9) is formed separately from the gearbox housing.

6. Rocking lever actuator according to one of Claims 1 to 5, **characterized in that** an actuating lever (19) for force transmission is provided between the engagement bearing (20) and the hydraulic transmission path.

7. Rocking lever actuator according to one of Claims 1 to 3, **characterized in that** the rocking lever actuator is arranged at least partially in the gearbox housing (12).

8. Rocking lever actuator according to Claim 7, **characterized in that** the rocking lever actuator is arranged in the gearbox housing (12).

9. Rocking lever actuator according to one of Claims 1 to 8, **characterized in that** the lever fulcrum of the rocking lever (1a, 1b, 15) is formed by a support roller (2a, 2b) which is moved along a rocking lever curve.

10. Rocking lever actuator according to Claim 9, **characterized in that** the support roller (2a, 2b) is driven at least in one movement direction by means of an actuator motor (3a, 3b).

11. Rocking lever actuator according to Claim 9, **characterized in that** the support roller (2a, 2b) is driven by means of a gearbox actuator.

12. Rocking lever actuator according to Claim 10, **characterized in that** the actuator motor (3a, 3b) is an electric motor.

## Revendications

1. Actionneur à levier basculant, pour actionner un embrayage d'un véhicule, comprenant au moins un levier basculant (1a, 1b, 15) exerçant une force d'actionnement variable pour ouvrir et/ou fermer l'embrayage, qui peut être sollicité par un ressort de charge (4a, 4b, 17), un pivot de levier du levier basculant (1a, 1b, 15) pouvant être déplacé, **caractérisé en ce qu'**une section de transfert hydraulique pour le transfert de force est prévue entre le levier basculant (1a, 1b, 15) et un palier d'embrayage (20) de l'embrayage.

2. Actionneur à levier basculant selon la revendication 1, **caractérisé en ce que** l'embrayage est une unité à double embrayage.

3. Actionneur à levier basculant selon la revendication 1 ou 2, **caractérisé en ce que** la section de transfert hydraulique présente un maître-cylindre (5a, 5b) et un cylindre récepteur.

4. Actionneur à levier basculant selon l'une quelconque des revendications 1 à 3, **caractérisé en ce que** l'actionneur à levier basculant est disposé dans un boîtier d'actionneur fermé (9).

5. Actionneur à levier basculant selon la revendication 4, **caractérisé en ce que** le boîtier d'actionneur (9) est séparé du boîtier de la transmission.

6. Actionneur à levier basculant selon l'une quelconque des revendications 1 à 5, **caractérisé en ce que** l'on prévoit entre le palier d'embrayage (20) et la section de transfert hydraulique un levier d'actionnement (19) pour le transfert de force.

7. Actionneur à levier basculant selon l'une quelconque des revendications 1 à 3, **caractérisé en ce que** l'actionneur à levier basculant est disposé au moins en partie dans le boîtier de la transmission (12).

8. Actionneur à levier basculant selon la revendication 7, **caractérisé en ce que** l'actionneur à levier basculant est disposé dans le boîtier de la transmission (12).

9. Actionneur à levier basculant selon l'une quelconque des revendications 1 à 8, **caractérisé en ce que** le pivot de levier du levier basculant (1a, 1b, 15) est réalisé au moyen d'un rouleau de support (2a, 2b), qui est déplacé le long d'une came de levier basculant.

10. Actionneur à levier basculant selon la revendication 9, **caractérisé en ce que** le rouleau de support (2a, 2b) est entraîné au moyen d'un moteur d'actionneur (3a, 3b) au moins dans un sens de déplacement.

11. Actionneur à levier basculant selon la revendication 9, **caractérisé en ce que** le rouleau de support (2a, 2b) est entraîné au moyen d'un actionneur de transmission.

12. Actionneur à levier basculant selon la revendication 10, **caractérisé en ce que** le moteur d'actionneur (3a, 3b) est un moteur électrique.
